# EUROPÄISCHE PATENTANMELDUNG

(11) **EP 1 124 205 A2**
(43) Veröffentlichungstag der Anmeldung: **16.08.2001**
(21) Anmeldenummer: 01101480.0
(22) Anmeldetag: 24.01.2001
(51) Int. Cl.: G07C 7/00, G01D 15/32

(54) **Anordnung zum Umrüsten eines mit einem verschieb- und verschwenkbaren Diagrammscheibenträger ausgerüsteten Fahrtschreibers in einen Fahrtschreiber mit einem ausschliesslich verschiebbaren Diagrammscheibenträger**

(30) Priorität: 12.02.2000 DE 20002560 U
(71) Anmelder: Mannesmann VDO Aktiengesellschaft, 60388 Frankfurt am Main (DE)
(72) Erfinder: Höni, Helmut, Dipl.-Ing. (FH), 78733 Aichhalden (DE)

(57) **Zusammenfassung**

Es wird vorgeschlagen in dem Diagrammscheibenträger (6) seitlich sich spiegelbildlich gegenüberliegende Aussparungen auszubilden, in welche Anschlagelemente (26) eingesetzt werden können, welche mit den Führungsschienen (17) des Diagrammscheibenträgers (6) stirnseitig zugeoredneten Abschlußbauteilen (25), die die Gelenkposition im Falle des Verschwenkens des Diagrammscheibenträgers (6) bestimmen, zusammenwirken.

## Beschreibung

Die Erfindung betrifft eine Anordnung zum Umrüsten eines mit einem verschieb- und verschwenkbaren Diagrammscheibenträger ausgerüsteten Fahrtschreibers in einen Fahrtschreiber mit einem ausschließlich verschiebbaren Diagrammscheibenträger, wobei der Diagrammscheibenträger in der Registrierposition innerhalb des im wesentlichen quaderförmigen Gehäuses des umzurüstenden Fahrtschreibers spielfrei verriegelt ist und in einer Einlege-/Entnahmeposition an Anschlägen anliegt, die Anschläge an im Gehäuse verschiebbar gelagerten, dem Diagrammscheibenträger seitlich zugeordneten Führungsschienen angeordnet sind und der Diagrammscheibenträger beidseitig mit miteinander fluchtenden, in die Führungsschienen eingreifenden Führungselementen ausgerüstet ist derart, dass die Führungselemente in der Anschlagstellung des Diagrammscheibenträgers ein Verschwenken des Diagrammscheibenträgers gestatten.

Um im Handhabungsbereich eines Fahrers innerhalb einer Fahrzeugkabine mehr Freiheit für die Anordnung eines Fahrtschreibers zu schaffen, insbesondere wenn es sich um einen Fahrtschreiber handelt, bei dem Diagrammscheiben als Aufzeichnungsträger Anwendung finden, und um andererseits die Instrumentendichte im unmittelbaren Sichtbereich des Fahrers zu verringern bzw. diesen Raum ausschließlich für anzeigende Instrumente vorsehen zu können, wird für Fahrtschreiber neuerdings ein quaderförmiges Gehäuse, beispielsweise ein Gehäuse im Radiofachformat bevorzugt. Diese Bauform hat zu Folge, einen - wenn nicht ein technisch aufwendiges Konzept vorgesehen werden soll, bei dem die Diagrammscheiben durch einen Schlitz in den Fahrtschreiber eingegeben, selbsttätig zwischen der Eingabe-/Entnahmeposition und der Registrierposition transportiert und uhrzeitrichtig zentriert werden - wenigstens die Mittel für einen uhrzeitrichtigen Transport der Diagrammscheiben umfassenden Diagrammscheibenträger vorzusehen, welcher in dem Gehäuse verschiebbar gelagert und schubladenartig entweder von Hand oder motorisch betätigbar ist.

Bei gewissen Einbaulagen eines derartigen Fahrtschreibers außerhalb des Armaturenbretts, beispielsweise in der Fahrzeugtüre, in der Mittelkonsole oder im Dachunterbau eines Fahrzeuges ist das Auffädeln der Diagrammscheiben auf den an der uhrzeitrichtig angetriebenen Diagrammscheibenauflage ausgebildeten Zentrier- und Mitnahmedorn problematisch, so dass es zweckmäßig ist, nicht nur ein Gerät mit ausschließlich verschiebbar geführtem Diagrammscheibenträger zu schaffen sondern das Gerät derart auszurüsten, dass sich der Diagrammscheibenträger in einer herausgezogenen Position in einer Gelenklage befindet, in der er in die Einlege-/Entnahmeposition verschwenkbar ist. Da für die diversen Einbausituationen sowohl Fahrtschreiber mit einem ausschließlich verschiebbaren als auch Fahrtschreiber mit einem zusätzlich verschwenkbaren Diagrammscheibenträger benötigt werden, ist es zwangsläufig erforderlich zwei verschiedene Fahrtschreibertypen herzustellen und die Lagerhaltung dafür zu betreiben.

Aufgabe der vorliegenden Erfindung war es somit, den mit der Herstellung von zwei Fahrtschreibertypen verbundenen Aufwand dadurch zu reduzieren, dass mit möglichst einfachen Maßnahmen und Mitteln ein Umrüsten des einen Fahrtschreibertyps, vorzugsweise des am häufigsten benötigten, in den weniger häufig benötigten vorgenommen werden kann.

Die Lösung dieser Aufgabe sieht ausgehend von dem gattungsgemäß beschriebenen Fahrtschreiber mit einem verschieb- und verschwenkbaren Diagrammscheibenträger vor, dass in dem Diagrammscheibenträger zwischen dessen frontseitiger Blende und den Führungselementen sich spiegelbildlich gegenüberliegende Aussparungen ausgebildet sind, dass in die Aussparungen einsetzbare Anschlagelemente vorgesehen sind, dass die Anschlagelemente derart ausgebildet sind, dass sie im in den Diagrammscheibenträger eingesetzten Zustand beim Herausziehen des Diagrammscheibenträgers aus dem Gehäuse mit den an den Führungsschienen angeordneten Anschlägen zusammenwirken und dass die an den Führungsschienen angeordneten Anschläge an den Führungsschienen stirnseitig zugeordneten und mit den Führungsschienen lösbar verbindbaren Abschlußbauteilen ausgebildet sind.

Vorteilhafte Ausgestaltungen der Erfindung beschreiben die Unteransprüche.

Der Vorteil, den die Erfindung bietet, besteht allgemein gesehen in dem geringen Aufwand, mit dem die Umrüstung erfolgen kann. Besonders vorteilhaft ist aber, dass noch in einem Endmontagezustand der laufenden Fahrtschreiberproduktion, das heißt vor dem Einsetzen des Diagrammscheibenträgers berücksichtigt werden kann, ob ein Fahrtschreiber mit verschieb- und verschwenkbarem oder ein Fahrtschreiber mit ausschließlich verschiebbarem Diagrammscheibenträger hergestellt wird. Außerdem ermöglicht die Erfindung sowohl ein Umrüsten als auch ein Rückrüsten in einer Kundendienstwerkstatt. Dabei sind lediglich die den Führungen zugeordneten Abschlußbauteile zu entfernen, der Diagrammscheibenträger aus dem Gerät herauszunehmen, die Anschlagelemente in den Diagrammscheibenträger einzusetzen oder zu entfernen, den Diagrammscheibenträger wieder in die stirnseitig offenen Führungsschienen einzuschieben und neue Abschlußbauteile an den Führungsschienen anzubringen.

Erwähnenswert ist ferner, dass für Fahrtschreiber mit ausschließlich verschiebbarem Diagrammscheibenträger, die in einer von der Horizontalen abweichenden Lage eingebaut werden, Rastmittel vorgesehen sind, welche sowohl als Hemmung gegen ein Zurückfallen des Diagrammscheibenträgers in das Gerät während der Entnahme bzw. dem Auflegen einer Diagrammscheibe als auch als Dämpfung beim Herausfahren des Diagrammscheibenträgers wirksam sind.

Das bevorzugte Ausführungsbeispiel sieht für diese Funktion blattfederartige, gewölbte Federelemente vor, die in der Anschlagstellung des Diagrammscheibenträgers vor die an den Führungsschienen angebrachten Abschlußbauteile greifen. Besonders vorteilhaft ist in diesem Zusammenhang, dass Anschlag und Federelement als ein Bauteil hergestellt sind, und dass dieses Mehrfunktion-Anschlagbauteil selbstsichernd in die im Diagrammscheibenträger vorgesehenen Aussparungen einsetzbar ist. Denkbar ist bezüglich der Hemm- bzw. Dämpfungsfunktion aber auch, entweder an den Abschlußbauteilen oder an den Führungsschienen Rastklinken anzuformen, die mit im Diagrammscheibenträger befestigten Anschlagelementen zusammenwirken.

Im folgenden sei die Erfindung anhand von Zeichnungen näher erläutert.

Es zeigen:
- Figur 1: eine Frontansicht eines gattungsgemäßen Fahrtschreibers,
- Figur 2: eine vergrößerte, teilweise dargestellte Seitenansicht des Fahrtschreibers gemäß Figur 1 mit in der Einlege-/Entnahmeposition befindlichem Diagrammscheibenträger,
- Figur 3: eine teilweise dargestellte Seitenansicht des Fahrtschreibers gemäß Figur 2 nach dem Umrüsten in einen Fahrtschreiber mit ausschließlich verschiebbarem Diagrammscheibenträger,
- Figur 4: eine perspektivische Darstellung eines Abschlußbauteils,
- Figur 5: eine teilweise dargestellte Draufsicht des Diagrammscheibenträgers mit eingesetztem Anschlagbauteil,
- Figur 6: eine perspektivische Darstellung eines bevorzugten Anschlagbauteils.

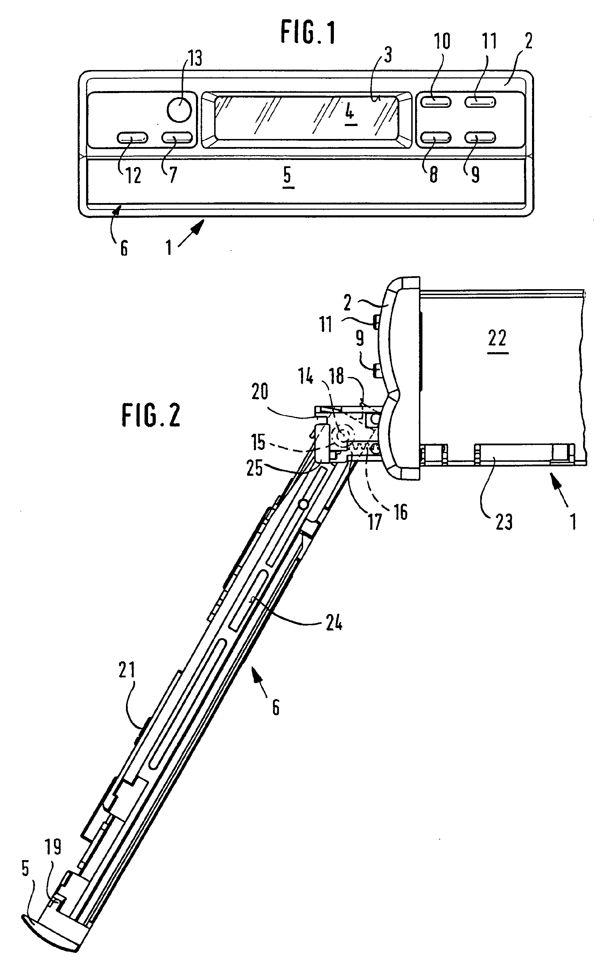

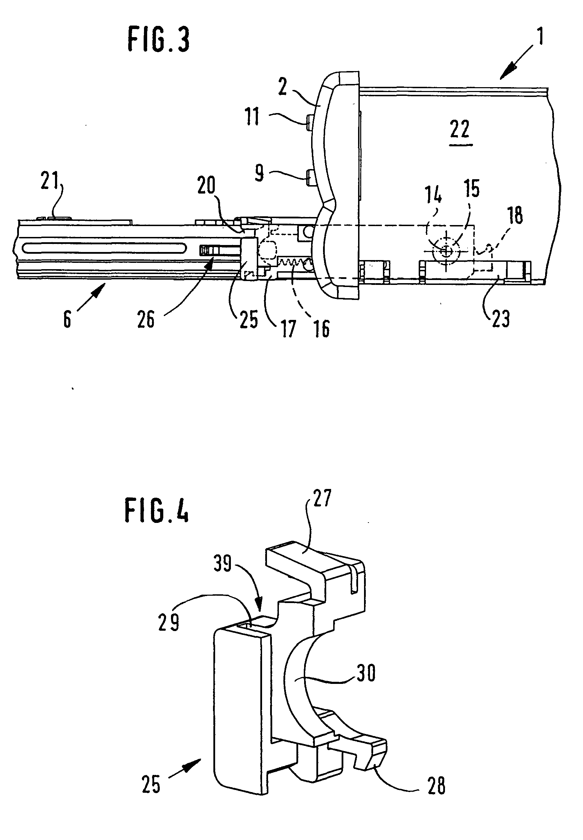

In Figur 1 ist mit 1 das quaderförmige Gehäuse eines als Ausführungsbeispiel gewählten Fahrtschreibers bezeichnet, an dessen Frontwand 2 ein Fensterausschnitt 3 für ein der Frontwand 2 zugeordnetes Display 4 ausgebildet ist. 5 stellt die frontseitige Blende eines in dem Gehäuse 1 geführten Diagrammscheibenträgers 6 dar. Von in der Frontwand 2 gelagerten Tasten 7, 8, 9, 10, 11 und 12 sind die Tasten 7 und 8 sowie die als Menütaste dienende Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben des im Gehäuse 1 schubladenartig bewegbaren und in einer Gelenkposition außerhalb des Gehäuses 1 verschwenkbaren Diagrammscheibenträgers 6 vorgesehen. Mittels einer mit 13 bezeichneten Plombe ist der Zugang zu einer Diagnosebuchse gesichert.

Die Figur 2 zeigt den Fahrtschreiber im Hinblick auf die Handhabung von Diagrammscheiben in der Einlege-/Entnahmeposition, das heißt, der Diagrammscheibenträger 6 ist gegenüber der Führungsebene innerhalb des Gehäuses 1 um einen bestimmten Winkel verschwenkt. In diesem Falle befindet sich eine Stützwelle 14, auf der der Diagrammscheibenträger 6 drehbar gelagert ist, in einer Gelenkposition außerhalb des Gehäuses 1. Die Gelenkposition, in der sich auf der Stützwelle 14 angeordnete als Führungselemente dienende Ritzel - eines ist in Figur 2 mit 15 bezeichnet - in einer Anschlagstellung befinden, wird von im Gehäuse 1 parallel angeordneten, verschiebbar gelagerten und mit den Ritzeln 15 zugeordneten Verzahnungen 16 ausgestatteten Führungsschienen 17 gebildet, wobei die Führungsschienen 17 in der Gelenkposition verriegelt sind. In der in Figur 2 dargestellten Einlege-/Entnahmeposition des Diagrammscheibenträgers 6 wirken am Diagrammscheibenträger 6 angeordnete Fangarme 18 mit den in geeigneter Weise verbreiterten Führungsschienen im Sinne eines Endanschlages bezüglich des Schwenkwinkels des Diagrammscheibenträgers 6 zusammen. Am Diagrammscheibenträger 6 ausgebildete Finger 19 und diesen in den Führungsschienen 17 zugeordnete Schlitze 20 dienen der Schaffung einer spielfreien Verbindung zwischen den Führungsschienen 17 und dem Diagrammscheibenträger 6.

Der Vollständigkeit halber sei erwähnt, dass der Diagrammscheibenträger 6 wenigstens ein Laufwerk für den uhrzeitrichtigen Antrieb einer Diagrammscheibe oder eines eine Registrierdauer von 7 Tagen ermöglichenden Diagrammscheibenbündels beinhaltet. Außerdem können in dem Diagrammscheibenträger 6 für das Registrieren von Drehzahlwerten üblicherweise auf der Rückseite einer Diagrammscheibe oder für das Registrieren von Arbeitszeiten auf einer zusätzlichen, dem Beifahrer zugeordneten Diagrammscheibe, Registriermittel angeordnet sein, die beim Inregistrierpositionbringen des Diagrammscheibenträgers 6 in geeigneter Weise mit den entsprechenden Antriebsmitteln gekuppelt werden. Mit 21 ist in Figur 2 die Stirnpartie eines in üblicher Weise den Diagrammscheiben zugeordneten, an einer geeigneten, von Laufwerk angetriebenen Auflage ausgebildeten Zentrier- und Mitnahmedorns bezeichnet. Das Nieder- bzw.

Festhalten einer eingelegten Diagrammscheibe erfolgt beispielsweise durch ein im Gehäuse 1 gelagertes Spannelement, welches beim Einschieben des Diagrammscheibenträgers 6 in das Gehäuse 1 selbsttätig in Funktion tritt. In den Seitenwänden 22 des Gehäuses 1 vertieft liegend ausgebildete Begrenzungsanschläge 23 dienen dem Einrasten von Sperrfedern, welche an einem für den Einbau des Fahrtschreibers vorgesehenen Rahmen ausgebildet sind. Mit 24 ist eine von zwei im Diagrammscheibenträger 6 spiegelbildlich gegenüberliegend ausgebildeten Aussparungen bezeichnet; 25 stellen den Führungsschienen 17 stirnseitig zugeordnete Abschlußbauteile dar.

Die Figur 3 zeigt den bisher beschriebenen Fahrtschreiber im umgerüsteten Zustand, das heißt, der Diagrammscheibenträger 6 kann nicht mehr verschwenkt werden; er ist ausschließlich verschiebbar, wobei die durch Einsetzen von Anschlagbauteilen 26 in die Aussparungen 24 im Zusammenwirken mit den Abschlußbauteilen 25 gebildete Anschlagstellung ausreichend Freiraum für das Einlegen und die Entnahme von Diagrammscheiben bietet.

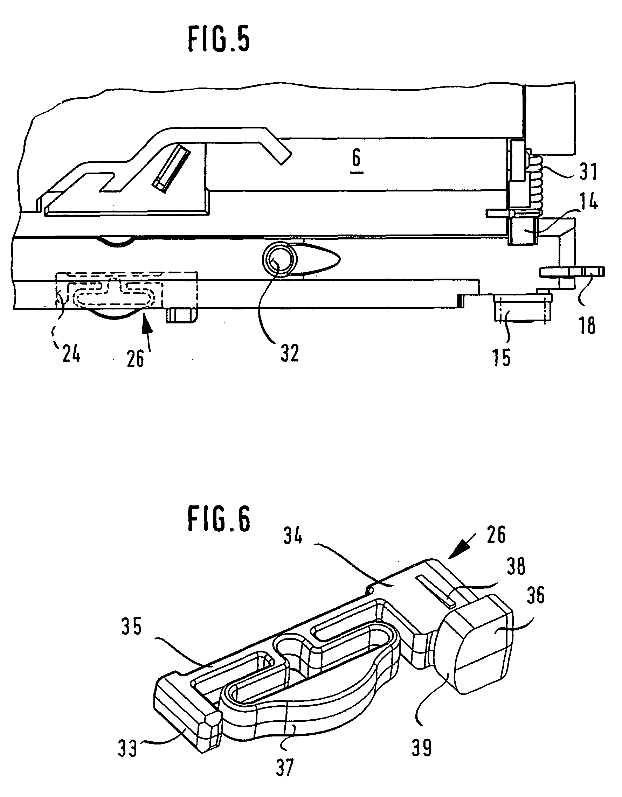

Das mit der Figur 4 freigestellte Abschlußbauteil 25 zeigt eine für ein Aufrasten und ein spielfreies Verbinden mit den Führungsschienen 17 geeignete Struktur mit Riegeln 27 und 28 sowie einem Ausrichtschlitz 29. Eine mit 30 bezeichnete konkave Fläche stellt die Anschlagfläche entweder für eines der Ritzel 15 oder für eines der Anschlagbauteile 26 dar. Vorzugsweise sind die Abschlußbauteile 25 derart gestaltet, dass sie nur durch Zerstören von den Führungsschienen 17 entfernt werden können. Das heißt, wenigstens an einem der Riegel 27 bzw. 28 wäre eine Sollbruchstelle ausgebildet. Insofern hätten die Abschlußbauteile 25 zusätzlich eine Plombierfunktion.

Die Draufsicht gemäß Figur 5 zeigt den Sitz eines Anschlagbauteiles 26 in einer Aussparung 24 des Diagrammscheibenträgers 6. Ferner ist aus der Figur 5 ersichtlich, dass dem Diagrammscheibenträger 6 auf der Stützwelle 14 aufgenommene Dämpfungsfedern 31 zugeordnet sind, die beim Verschwenken des Diagrammscheibenträgers 6 kurz vor Erreichen der Anschlagstellung der Fangarme 18 wirksam werden. Mit 32 ist eine von zwei im Diagrammscheibenträger 6 vorgesehenen konusförmigen Senkungen bezeichnet, die im Zusammenwirken mit kegelförmigen Zapfen die Registrierposition des Diagrammscheibenträgers 6 innerhalb des Gehäuses 1 bestimmen.

Mit der Figur 6 ist das bevorzugte Anschlagelement, das Anschlagbauteil 26, im Einzelnen genauer aufgezeigt. Das Anschlagbauteil 26 wird im wesentlichen gebildet von einem den Aussparungen 24 des Diagrammscheibenträgers 6 entsprechenden Träger, bestehend aus Seitenwangen 33, 34 und einem verbindenden Steg 35, einem an einer Seitenwange 34 angeformten Anschlagkopf 36 und einem mit dem Steg 35 verbunden als Doppelfalte geformten Federelement 37. Dabei ist die Breite des Federelementes 37 derart abgestimmt, dass es zwischen den Wangen 33, 34 und innerhalb der Aussparung 24 des Diagrammscheibenträgers 6 frei beweglich ist. Um einen sicheren Sitz des Anschlagbauteils 26 in den Aussparungen 24 zu gewährleisten sind insbesondere die Seitenwangen 33 und 34 mit einem Übermaß toleriert und zusätzlich mit keilförmigen Rippen 38 versehen. Eine an dem Anschlagkopf 36 konvex ausgebildete Fläche 39 wirkt, beim umgerüsteten Fahrtschreiber, wie aus der Figur 3 ersichtlich ist, in der Anschlagstellung des Diagrammscheibenträgers 6 mit der Fläche 30 des Abschlußbauteils 25 zusammen.

Abschließend sei nochmals erwähnt, dass die bevorzugte Ausführungsform lediglich ein Bauteil für die Anschlag- und die Hemmfunktion vorsieht und dieses Bauteil lediglich durch Einstecken in im Diagrammscheibenträger 6 vorbereitete Aussparungen 24 montiert werden kann. Dabei ist durch geeignete Formgebung der Aussparungen 24 und einer entsprechenden Formgebung der Anschlagbauteile 26 gewährleistet, dass die Positionierung der Anschlagbauteile 26 eindeutig ist. Selbstverständlich lassen sich auch getrennte Bauteile für einerseits die Hemmfunktion andererseits die Anschlagfunktion anwenden. Letzten Endes können unter Verzicht auf die Hemmfunktion in dem Diagrammscheibenträger 6 eingesetzte zylindrische Stifte die Anschlagfunktion ausüben.

Bezüglich des bevorzugten Ausführungsbeispiels sei noch nachgetragen, dass die maßliche Abstimmung vom Anschlagbauteil 26 und Abschlußbauteil 25 derart getroffen sein muß, dass die Federelemente 37 sich beim Herausziehen des Diagrammscheibenträgers 6 kurz vor Erreichen der Anschlagstellung an den Stirnseiten der Abschlußbauteile 25, wie dies auch aus der Figur 3 hervorgeht, entspannen können. Auf diese Weise wird eine Funktion erzielt, die bei einer Einbausituation mit nach vorn fallendem Diagrammscheibenträger 6 als Dämpfung wirksam ist, bei der entgegengesetzten Einbausituation ein Zurückfallen des Diagrammscheibenträgers 6, nachdem er in die Einlege-/Entnahmeposition gebracht worden ist, verhindert, wobei die Federelemente 37 mit den stirnseitigen Kanten 39 der Abschlußbauteile 25 in Wirkverbindung stehen.

## Patentansprüche

1. Anordnung zum Umrüsten eines mit einem verschieb- und verschwenkbaren Diagrammscheibenträger ausgerüsteten Fahrtschreibers in einen Fahrtschreiber mit einem ausschließlich verschiebbaren Diagrammscheibenträger, wobei der Diagrammscheibenträger in der Registrierposition innerhalb des im wesentlichen quaderförmigen Gehäuses des umzurüstenden Fahrtschreibers spielfrei verriegelt ist und in einer Einlege-/Entnahmeposition an Anschlägen anliegt, die Anschläge an im Gehäuse verschiebbar gelagerten, dem Diagrammscheibenträger seitlich zugeordneten Führungsschienen angeordnet sind und der Diagrammscheibenträger beidseitig mit miteinander fluchtenden, in die Führungsschienen eingreifenden Führungselementen ausgerüstet ist derart, dass die Führungselemente in der Anschlagstellung des Diagrammscheibenträgers ein Verschwenken des Diagrammscheibenträgers gestatten,
**dadurch gekennzeichnet,**
dass in dem Diagrammscheibenträger (6) zwischen dessen frontseitiger Blende (5) und den Führungselementen (15) sich spiegelbildlich gegenüberliegende Aussparungen (24) ausgebildet sind,
dass in die Aussparungen (24) einsetzbare Anschlagelemente vorgesehen sind,
dass die Anschlagelemente derart ausgebildet sind, dass sie im in den Diagrammscheibenträger (6) eingesetzten Zustand beim Herausziehen des Diagrammscheibenträgers (6) aus dem Gehäuse (1) mit den an den Führungsschienen (17) angeordneten Anschlägen zusammenwirken und
dass die an den Führungsschienen (17) angeordneten Anschläge an den Führungsschienen (17) stirnseitig zugeordneten und mit den Führungsschienen (17) lösbar verbindbaren Abschlußbauteilen (25) ausgebildet sind.

2. Anordnung nach Anspruch 1,
**dadurch gekennzeichnet,**
dass als Anschlagelemente im wesentlichen zylindrische Stifte Anwendung finden.

3. Anordnung nach Anspruch 1,
**dadurch gekennzeichnet,**
dass dem ausschließlich verschiebbaren Diagrammscheibenträger (6) Rastmittel zugeordnet sind, welche beim Zurückschieben des Diagrammscheibenträgers (6) aus der Einlege-/Entnahmeposition in die Registrierposition und umgekehrt im Sinne einer Hemmung wirksam sind.

4. Anordnung nach Anspruch 3,
**dadurch gekennzeichnet,**
dass mit den Anschlagelementen zusammenwirkende, an den Abschlußbauteilen (25) angeformte Rastklinken vorgesehen sind.

5. Anordnung nach Anspruch 4,
**dadurch gekennzeichnet,**
dass die Rastklinken an den Führungsschienen (17) ausgebildet sind.

6. Anordnung nach Anspruch 3,
**dadurch gekennzeichnet,**
dass als Rastmittel in den Diagrammscheibenträger (6) einsetzbare, gewölbte , flache Federelemente vorgesehen sind.

7. Anordnung nach Anspruch 3,
**dadurch gekennzeichnet,**
dass die Federelemente und die Anschlagelemente jeweils als ein in den Diagrammscheibenträger (6) einsetzbares Anschlagbauteil (26) ausgebildet sind.

8. Anordnung nach Anspruch 7,
**dadurch gekennzeichnet,**
dass das Anschlagbauteil (26) derart ausgebildet ist,
dass an einem den Abmessungen einer Aussparung (24) im Diagrammscheibenträger (6) entsprechenden Träger ein Anschlagkopf (36) und ein in Form einer Doppelfalte ausgeformtes Federelement (37) ausgebildet sind.
